# FASCICULE DE BREVET EUROPEEN

(11) **EP 2 207 687 B1**
(45) Date de publication et mention de la délivrance du brevet: **30.05.2012**
(21) Numéro de dépôt: 08805147.9
(22) Date de dépôt: 08.10.2008
(51) Int. Cl.: B60C 11/00, B60C 19/00

(54) **VEHICULE LOURD COMPORTANT UNE BANDE DE ROULEMENT CONSTITUEE DE PLUSIEURS PARTIES**
SCHWERLASTFAHRZEUG MIT EINER LAUFFLÄCHE AUS MEHREREN TEILEN
HEAVY DUTY VEHICLE WITH A TREAD INCLUDING A PLURALITY OF PARTS

(30) Priorité: 10.10.2007 FR 0707155
(43) Date de publication de la demande: 21.07.2010
(73) Titulaire: Société de Technologie Michelin, 63000 Clermont-Ferrand (FR); MICHELIN Recherche et Technique S.A., 1763 Granges-Paccot (CH)
(72) Inventeur: HARLE, François, F-63000 Clermont-Ferrand (FR)
(74) Mandataire: Le Cam, Stéphane Georges Elie
(86) Numéro de dépôt international: PCT/EP2008/063478
(87) Numéro de publication internationale: WO 2009/047271

(56) Documents cités:
- JP-A- 8 318 712
- JP-A- 10 071 810

## Description

L'invention concerne un véhicule tel qu'un véhicule de transport ou un engin de « Génie Civil », comportant au moins deux trains, au moins l'un d'eux comportant deux ensembles de roues jumelés équipées de pneumatiques.

Bien que non limité à ce type d'application, l'invention sera plus particulièrement décrite en référence à un véhicule de type « dumper » d'une masse supérieure à 300 tonnes, équipé de pneumatiques de diamètre supérieur à trois mètres cinquante présentant une largeur axiale supérieure à 37 pouces.

De tels véhicules, destinés généralement à porter de lourdes charges, comprennent un train avant directeur comportant deux roues directrices et un train arrière, le plus souvent rigide, comportant quatre roues motrices réparties deux à deux de chaque côté.

Un train est défini comme un ensemble des éléments permettant de relier la structure fixe du véhicule au sol.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Un plan circonférentiel est un plan perpendiculaire à l'axe de rotation du pneumatique.

Le plan médian circonférentiel, ou plan équatorial, est un plan perpendiculaire à l'axe de rotation du pneu et qui divise le pneumatique en deux moitiés.

Dans le cas de véhicules, notamment destinés à des usages dans des mines ou carrières pour le transport de charges, les difficultés d'accès et les exigences de rendement conduisent les fabriquants de ces véhicules à augmenter leur capacité de charge. Il s'ensuit que les véhicules sont de plus en plus grands et donc eux-mêmes de plus en plus lourds et peuvent transporter une charge de plus en plus importante. Les masses actuelles des ces véhicules peuvent atteindre plusieurs centaines de tonnes et il en est de même pour la charge à transporter ; la masse globale peut atteindre jusqu'à 600 tonnes.

Actuellement, comme énoncé précédemment, les véhicules de ce type, tels que les « dumper » utilisés dans les mines, comportent un train arrière moteur sur lequel sont montées quatre roues, jumelées deux à deux, pour répondre à ces exigences.

Par ailleurs, les dimensions de ces roues et en conséquence celles des pneumatiques et notamment la raideur des zones basses nécessitent que lesdites roues soient réalisées en plusieurs parties pour permettre le montage du pneumatique sur une jante. Le montage et le démontage de ces pneumatiques qui interviennent en cas de remplacement ou d'entretien nécessitent des manipulations longues et fastidieuses. Le nombre de pièces de serrage devant être manipulées lors de ces opérations peut être supérieur à 200, auquel s'associent des couples de serrage des ces pièces très importants. Le temps de ces opérations est en conséquence long et donc nuisible à la productivité recherchée dans le travail d'exploitation de ces mines.

La demande actuelle s'orientant toujours vers une hausse de la capacité de charge de ces engins, les différents paramètres énoncés précédemment ont conduit à un élargissement des pneumatiques de façon à augmenter le volume d'air de ceux-ci. Il est en effet quasi-impossible d'augmenter le diamètre des pneumatiques qui a été atteint aujourd'hui, et qui est de l'ordre de 4 mètres, notamment pour des raisons de transport desdits pneumatiques. En effet, les dimensions de ces pneumatiques vont être limitées pour leur transport, notamment par les largeurs de route et par les hauteurs de passage sous les ponts. Il est également quasi-impossible de diminuer le diamètre de jante, celui-ci permettant notamment la mise en place du système de transmission de couple moteur et des systèmes de freinage.

Durant leurs études, les inventeurs ont su mettre en évidence que ces pneumatiques « élargis » permettent effectivement d'autoriser une augmentation de la charge transportée mais présentent différents inconvénients. Les essais ont en effet montré que la résistance à l'usure de ces pneumatiques diminue, notamment en ce qui concerne les pneumatiques montés en jumelé sur le train arrière, du fait notamment de phénomènes de couples induits entre les pneumatiques apparaissant notamment dans les passages de courbes. Des changements de pneumatiques plus fréquents conduisent à une diminution des rendements de ces véhicules. Les véhicules actuels sont équipés de différentiels entre les roues d'un même train disposées de part et d'autre d'un axe de symétrie dudit train pour atténuer ces phénomènes.

En outre, ils ont mis en évidence que dans certaines conditions de roulage avec une certaine charge, la maniabilité du véhicule, notamment dans les trajectoires courbes est fortement diminuée. En effet, lorsque les pneumatiques du train avant sont braqués, notamment lorsque le véhicule est chargé et pour le passage de courbes à rayons de courbures relativement faibles, il est possible que le véhicule poursuive une trajectoire sensiblement rectiligne. Il apparaît en effet que, dans certaines conditions de charge et de roulage, la maniabilité d'un tel véhicule selon une trajectoire en courbe équipé de quatre pneumatiques tels que décrits précédemment sur le train arrière, est très difficile voire impossible, le véhicule ne répondant pas au braquage imposé par les pneumatiques du train avant. Cela peut être particulièrement notable sur sols glissants tels que sur la boue, sur la neige ou sur la glace ou bien lors de passages en courbes à faibles rayons de courbure, l'inscription du véhicule dans un virage nécessitant un braquage plus important. Ces conditions peuvent en outre conduire au clivage et à la destruction des pneumatiques du train avant et donc encore une fois à des changements de pneumatiques plus fréquents.

Par ailleurs, la demande de brevet WO 00/71365 a décrit une technique permettant de simplifier le montage des pneumatiques ceux étant montés directement sur le moyeu, faisant alors office de jante. Des anneaux indépendants jouent alors le rôle des sièges de jante et sont maintenus en place par des anneaux de blocage qui se solidarisent au moyeu du fait notamment de profils complémentaires.

Le document JP-A-10-71810 divulgue des ensembles montés jumelés pour véhicule, constituant une paire d'ensembles montés, chaque ensemble monté comprenant un pneumatique monté sur une roue, chaque pneumatique comprenant une bande de roulement ayant une surface extérieure, chacune des bandes de roulement comportant sur sa surface extérieure deux parties circonférentielles, les répartitions axiales desdites parties circonférentielles des bandes de roulement étant symétriques par rapport à un plan longitudinal passant par un point à mi-distance entre les ensembles montés jumelés.

Les inventeurs se sont ainsi donnés pour mission d'améliorer les propriétés des pneumatiques de ces véhicules lourds en termes d'usure par rapport à celles des pneumatiques actuels, notamment en vue d'améliorer le rendement des véhicules et en outre d'améliorer les conditions de maniabilité de ces véhicules quelles que soient les conditions d'utilisation et de roulage.

Ce but a été atteint selon l'invention par un véhicule, tel qu'un véhicule de transport ou un engin de « Génie Civil », comportant au moins deux trains, au moins l'un d'eux comportant au moins deux ensembles montés jumelés équipées de pneumatiques, chacune des bandes de roulement des pneumatiques équipant deux ensembles montés jumelés comportant au moins sur sa surface extérieure au moins deux parties circonférentielles, axialement contiguës, constituées de mélanges polymériques présentant des propriétés physico-chimiques différentes et les répartitions desdits mélanges polymériques dans les bandes de roulement de chacun des pneumatiques étant symétriques par rapport à un plan longitudinal passant par un point à mi-distance entre les deux ensembles montés jumelés.

Un ensemble monté au sens de l'invention est par exemple constitué d'une roue et d'un pneumatique. Il peut s'agir de tout autre système permettant d'associer un pneumatique à un véhicule tel que par exemple la technique de montage d'un pneumatique décrite dans la demande WO 00/71365.

Les inventeurs ont su mettre en évidence que le jumelage des pneumatiques usuels équipant le train arrière conduit à des contraintes induites dans les pneumatiques qui d'une part accentue l'usure desdits pneumatiques de manière irrégulière selon la direction axiale des pneumatiques lorsque le véhicule suit une trajectoire courbe et d'autre part crée des contraintes qui s'opposent à la maniabilité du véhicule selon ces trajectoires.

L'utilisation de pneumatiques jumelés comme le définit l'invention conduit à une usure moindre et régulière desdits pneumatiques notamment lors de passages en courbes. En effet, la conception du véhicule selon l'invention va permettre de diminuer les contraintes longitudinales, dues aux couples induits entre les pneumatiques, apparaissant notamment lorsque le véhicule suit le tracé d'une courbe. L'usure plus régulière ainsi obtenue des bandes de roulement permet de conserver la forme des bandes de roulement des pneumatiques et ainsi d'optimiser leur fonctionnalité en matière de roulage et de portage. Cette usure plus régulière permet en outre de conserver dans le temps un passage de couple satisfaisant, notamment dans les trajectoires courbes, et permet ainsi d'éviter ou tout au moins de limiter les situations de blocage évoquées précédemment et donc de conserver une maniabilité satisfaisante du véhicule.

En conséquence, les pneumatiques jumelés selon l'invention conduisent à un meilleur fonctionnement du véhicule et à des changements de pneumatiques moins fréquents et donc à une meilleure productivité.

Selon l'invention, les pneumatiques équipant deux roues jumelées sont donc différents. Sur un même train comportant deux paires de roues jumelées, les pneumatiques vont pouvoir être identiques par paires. Le pneumatique équipant la roue axialement intérieure d'une première paire de roues jumelées sera identique au pneumatique équipant la roue axialement extérieure de l'autre paire de roues jumelées. Il va ainsi être possible d'améliorer les performances d'endurance de ces pneumatiques en effectuant des permutations après une période de roulage donnée entre deux pneumatiques identiques. Ces permutations, usuelles pour ce type d'applications, permettent de modifier les contraintes supportées par le pneumatique, celui-ci passant ainsi d'une position axialement intérieur sur un ensemble de roues jumelées à une position axialement extérieure.

Selon un premier mode de réalisation avantageux de l'invention correspondant notamment au roulage de véhicules de type dumper sur des sols de type caillouteux, les parties circonférentielles axialement extérieures des bandes de roulement des pneumatiques équipant deux ensembles montés jumelés constituées de mélanges polymériques présentent des propriétés de rigidité supérieures au reste de la surface de roulement. En d'autres termes, les mélanges polymériques des parties circonférentielles axialement extérieures des bandes de roulement présentent des propriétés de rigidité permettant d'accepter le glissement sans présenter d'usure excessive.

Avantageusement encore, selon ce premier mode de réalisation de l'invention, le rapport entre le module d'élasticité des parties circonférentielles axialement extérieures des bandes de roulement des pneumatiques équipant deux ensembles montés jumelés sur celui des parties circonférentielles axialement intérieures des bandes de roulement desdits pneumatiques est supérieur ou égal 70 %.

On entend par « module d'élasticité » d'un mélange caoutchouteux, un module sécant d'extension à 10 % de déformation et à température ambiante.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Les positions axialement intérieure et axialement extérieure sont faites relativement à un ensemble de pneumatiques jumelés.

Selon un deuxième mode de réalisation avantageux de l'invention correspondant notamment au roulage de véhicules de type chariot élévateur sur des sols de type béton ou goudron susceptibles d'être soumis à des rayons de braquage très petits, les parties circonférentielles axialement extérieures des bandes de roulement des pneumatiques équipant deux ensembles montés jumelés constituées de mélanges polymériques présentent des propriétés de rigidité inférieures au reste de la surface de roulement. En d'autres termes, les mélanges polymériques des parties circonférentielles axialement extérieures des bandes de roulement présentent des propriétés de rigidité permettant d'accepter une déformation sans présenter d'usure excessive. De tels pneumatiques comportent alors avantageusement des sculptures adaptées en fonction de la nature des mélanges polymériques de la bande de roulement ; ces sculptures sont par exemple lamellisées sur les parties circonférentielles axialement extérieures des bandes de roulement notamment en vue d'accentuer encore la déformation sans usure excessive.

Avantageusement encore, selon ce deuxième mode de réalisation de l'invention, le rapport entre le module d'élasticité des parties circonférentielles axialement intérieures des bandes de roulement des pneumatiques équipant deux ensembles montés jumelés sur celui des parties circonférentielles axialement extérieures des bandes de roulement desdits pneumatiques est supérieur ou égal 35 %.

Une variante de réalisation de l'invention prévoit que les bandes de roulement de chacun des pneumatiques équipant deux ensembles montés jumelés présentent au moins sur leurs surfaces extérieures un gradient de variation des propriétés physico-chimiques selon la direction axiale. Selon cette variante de réalisation de l'invention, les propriétés physico-chimiques de chacune des bandes de roulement varient continûment selon la direction axiale.

Selon un premier mode de réalisation de l'invention, dans tout plan circonférentiel des bandes de roulement de chacun des pneumatiques équipant deux ensembles montés jumelés, les propriétés physico-chimiques sont identiques selon les directions longitudinale et radiale. Conformément à ce premier mode de réalisation de l'invention, la bande de roulement est constituée d'au moins deux parties circonférentielles, chacune étant uniforme sur toute son épaisseur, c'est-à-dire selon la direction radiale. La bande de roulement du pneumatique conservera donc à sa surface une répartition de ses propriétés physico-chimiques constante quelle que soit l'usure de la dite bande de roulement.

Selon un deuxième mode de réalisation de l'invention, dans tout plan circonférentiel des bandes de roulement de chacun des pneumatiques équipant deux ensembles montés jumelés, les propriétés physico-chimiques sont identiques selon la direction longitudinale et présentent au moins une variation selon la direction radiale. Selon ce deuxième mode de réalisation de l'invention, chacune des parties circonférentielles comporte au moins deux mélanges polymériques radialement superposés. Un tel mode de réalisation peut éventuellement permettre après l'usure des premières couches radialement extérieures, d'inverser la position des deux pneumatiques sur les deux roues jumelées en choisissant par exemple des couches radialement superposées aux propriétés inversées dans chacune des deux parties circonférentielles constituant les deux épaules de chacun des pneumatiques.

Selon certaines configurations de véhicules, le train arrière du véhicule comporte au moins quatre ensembles montés jumelés deux à deux, chacun des pneumatiques équipant les ensembles montés étant conforme à l'invention.

Selon d'autres configurations de véhicules, le train avant du véhicule comporte au moins quatre ensembles montés jumelés deux à deux, chacun des pneumatiques équipant les-ensembles montés étant conforme à l'invention.

D'autres types de véhicules peuvent encore comporter plusieurs trains chacun comportant des ensembles montés jumelés, chacun des pneumatiques équipant les ensembles montés étant conforme à l'invention.

L'invention concerne encore à des véhicules comportant plusieurs trains chacun équipé d'ensembles montés jumelés, seulement un ou plusieurs trains comportant des pneumatiques équipant les ensembles montés étant conformes à l'invention.

L'invention prévoit en outre avantageusement de combiner le véhicule tel que défini précédemment à un montage sans roue sur le train avant, les pneumatiques étant mis en place sur le moyeu prévu à cet effet par l'intermédiaire de premiers anneaux de montage formant les sièges des bourrelets des pneumatiques et de seconds anneaux de blocage garantissant la mise en place desdits premiers anneaux et donc des pneumatiques. Un montage de ce type a déjà été décrit dans la demande de brevet WO 00/71365 citée précédemment. L'invention requiert selon cette réalisation de prévoir sur le moyeu des évidements pour recevoir les anneaux de blocage, la mise en place de deux de ces anneaux étant nécessaire par pneumatique. Un tel montage des pneumatiques sur un véhicule permet encore d'améliorer la productivité du véhicule, le remplacement des pneumatiques étant simplifiés et plus rapide.

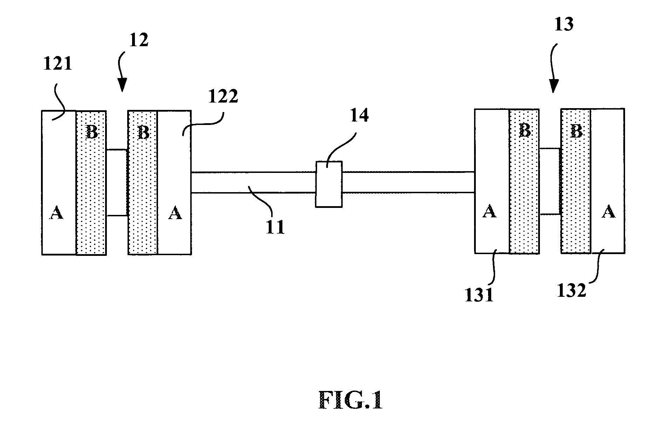

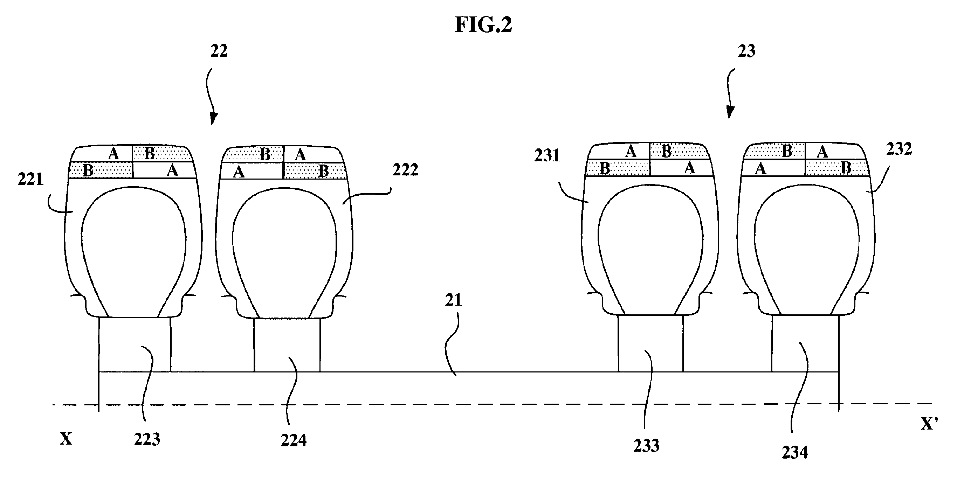

D'autres détails et caractéristiques avantageux de l'invention ressortiront ci-après de la description d'exemples de réalisation de l'invention en référence aux figures 1 et 2 qui représentent :
- figure 1, une représentation schématique d'un train d'un véhicule selon l'invention,
- figure 2, un schéma vu en coupe d'un train d'un véhicule selon un second mode de réalisation de l'invention,

Les figures ne sont pas représentées à l'échelle pour en simplifier la compréhension. La figure 2 ne représente que la moitié des ensembles montés qui se prolongent de manière symétrique par rapport à l'axe XX' qui représente un plan méridien des ensembles montés.

Sur la figure 1, est représenté de manière schématique un train 11 d'un véhicule comportant deux paires 12, 13 d'ensembles montés jumelés comportant respectivement des pneumatiques 121, 122 et 131, 132. Au centre du train 11, on trouve habituellement un différentiel 14, qui permet de répartir la motricité de part et d'autre du train 11.

Un tel train 11 est par exemple extrait d'un véhicule de type Dumper Caterpillar 797 présentant un poids total en charge de l'ordre de 630 tonnes.

Les pneumatiques équipant ce véhicule sont des pneumatiques de grande dimension dont le rapport de forme H/S est égal à 0,80, H étant la hauteur du pneumatique sur jante et S la largeur axiale maximale du pneumatique, lorsque ce dernier est monté sur sa jante de service et gonflé à sa pression recommandée. Il s'agit de pneumatiques de dimension 59/80R63.

Conformément à l'invention, chacun des pneumatiques 121, 122, 131, 132 présente des bandes de roulement comportant deux parties circonférentielles, constituées de mélanges polymériques présentant des propriétés physico-chimiques différentes. La nature des mélanges est indiquée sur les bandes de roulement par les lettres « A » et « B ». Les mélanges « A » sont des mélanges polymériques présentant un module d'élasticité égal à 7.7 N/mm² et les mélanges « B » sont des mélanges polymériques présentant un module d'élasticité égal à 4.3 N/mm². Les mélanges A présentent par ailleurs un coefficient de frottement inférieur à 0.3 et les mélanges B présentent un coefficient de frottement supérieur à 0.6.

Lors de roulage la répartition et le choix de ces mélanges polymériques permet de diminuer, notamment lors de passages en courbe, les contraintes induites entre les pneumatiques. En effet, le mélange « A », plus rigide mis en place au niveau de l'épaule axialement intérieure du pneumatique axialement intérieur 122 et au niveau de l'épaule axialement extérieur du pneumatique axialement extérieur 121 permet de diminuer les effets respectifs moteur et freineur de chacune de ces épaules du fait d'un glissement plus important. Il s'ensuit que l'usure de ces épaules, contrairement à des pneumatiques usuels, n'est pas accentuée lors des passages de courbes par rapport aux autres parties des bandes de roulement des pneumatiques.

Le schéma de la figure 1 montre encore que les pneumatiques 121 et 131 peuvent être permutés l'un avec l'autre. Il en est de même des pneumatiques 122 et 132. Ces permutations des pneumatiques permettent en positionnant le pneumatique à des emplacements différents sur le véhicule d'obtenir une fatigue de ces composants plus homogène, ceux-ci étant sollicités de manières différentes à chacun des emplacements.

Des essais ont été réalisés avec deux véhicules identiques circulant sur le même parcours. Les véhicules comportent quatre pneumatiques montés sur le train arrière jumelés deux à deux. Le premier véhicule comporte des pneumatiques conformes à l'invention alors que le deuxième véhicule est équipé de pneumatiques conventionnels. Seules les bandes de roulement diffèrent entre les différents pneumatiques. Les roulages effectués ont montré que le véhicule conforme à l'invention présente une usure des pneumatiques régulières permettant de conserver des formes sensiblement cylindriques alors que l'usure des pneumatiques du deuxième véhicule est irrégulière, l'usure étant plus prononcée sur les bords des pneumatiques axialement extérieurs lorsque l'on considère un ensemble jumelé.

Il s'est avéré en outre que, lorsque l'usure des pneumatiques est visible, le véhicule selon l'invention présente une maniabilité améliorée, notamment pour suivre des trajectoires courbes présentant des rayons de courbure relativement faibles.

La figure 2 illustre de manière schématique un train 21 d'un véhicule comportant deux paires 22, 23 d'ensembles montés jumelés comportant respectivement des pneumatiques 221, 222 et 231, 232 et des roues 223, 224 et 233, 234.

Comme dans le cas de la figure 1, les mélanges polymériques présents en surface de la bande de roulement varie selon la direction axiale. Ainsi, chacun des pneumatiques 221, 222, 231, 232 présente des bandes de roulement comportant en surface deux parties circonférentielles, constituées de mélanges polymériques présentant des propriétés physico-chimiques différentes. Comme dans le cas de la figure 1, la nature des mélanges est indiquée sur les bandes de roulement par les lettres « A » et « B ». Dans leur état initial les mélanges polymériques présents en surface des bandes de roulement sont identiques à ceux de la figure 1. Par contre, après une usure donnée des bandes de roulement, la figure 2 montre que l'usure d'un mélange « A » va laisser apparaître un mélange « B » et l'usure d'un mélange « B » va laisser apparaître un mélange « A ». Les propriétés en surface de la bande de roulement de ces pneumatiques se trouvent donc inversées par rapport à leur état initial. Il est alors nécessaire pour retrouver la configuration conforme de l'invention de permuter par exemple d'une part les pneumatiques 221 et 222 et d'autre part les pneumatiques 231 et 232. Comme expliqué précédemment en référence à la figure 1, cette opération est bénéfique puisqu'elle va permettre en fait de pouvoir utiliser un pneumatique conforme à l'invention sur l'ensemble des emplacements d'un train du véhicule et donc d'homogénéiser au mieux les contraintes, et donc la fatigue, subies par les pneumatiques et plus spécifiquement par leurs composants.

L'invention ne doit pas être comprise comme étant limitée à la description de ces exemples. Une bande de roulement d'un pneumatique équipant un véhicule selon l'invention peut par exemple comporter plus de deux parties circonférentielles constituées de mélanges polymériques présentant des propriétés physico-chimiques différentes. La bande de roulement peut être constituée de mélanges polymériques présentant en surface une variation graduelle des propriétés physico-chimiques.

L'invention a essentiellement été décrite en référence à des engins de génie civil de type dumper mais elle doit être comprise comme s'appliquant à tous véhicules présentant un train comportant des ensembles montés jumelés dont les pneumatiques présentent une largeur telle qu'elle conduit à une usure irrégulière ou bien à tous véhicules présentant un train comportant des ensembles montés jumelés dont l'usage nécessite des passages en courbe avec de faibles rayons de courbure.

L'invention s'applique encore à des véhicules comportant un ou plusieurs trains équipés d'ensemble montés jumelés, les caractéristiques des bandes de roulement des pneumatiques conformes à l'invention se trouvant sur les pneumatiques d'un train ou de plusieurs trains, qu'ils soient moteurs, directionnels, porteurs ou encore combinant deux ou trois de ces qualités.

## Revendications

1. Ensembles montés jumelés (12, 13) pour véhicule, tel qu'un véhicule de transport ou un engin de « Génie Civil », constituant une paire d'ensembles montés, chaque ensemble monté comprenant un pneumatique (121, 122, 131, 132) monté sur une roue, chaque pneumatique comprenant une bande de roulement ayant une surface extérieure, **caractérisés en ce que** chacune des bandes de roulement des pneumatiques (121, 122, 131, 132) des ensembles montés jumelés comporte au moins sur sa surface extérieure au moins deux parties circonférentielles, constituées de mélanges polymériques (A, B) présentant des propriétés physico-chimiques différentes, et **en ce que** les répartitions axiales desdits mélanges polymériques dans les bandes de roulement de chacun des pneumatiques sont symétriques par rapport à un plan longitudinal passant par un point à mi-distance entre les ensembles montés jumelés.

2. Ensembles montés jumelés (12, 13) selon la revendication 1, **caractérisés en ce que** les parties circonférentielles axialement extérieures (A) des bandes de roulement des pneumatiques (121, 122, 131, 132) des ensembles montés jumelés constituées de mélanges polymériques présentent des propriétés de rigidité supérieures au reste (B) de la surface de roulement.

3. Ensembles montés jumelés (12, 13) selon la revendication 1, **caractérisés en ce que** les parties circonférentielles axialement extérieures (A) des bandes de roulement des pneumatiques (121, 122, 131, 132) des ensembles montés jumelés constituées de mélanges polymériques présentent des propriétés de rigidité inférieures au reste (B) de la surface de roulement.

4. Ensembles montés jumelés (12, 13) selon l'une des revendications précédentes, **caractérisés en ce que** les bandes de roulement de chacun des pneumatiques (121, 122, 131, 132) des ensembles montés jumelés présentent au moins sur leurs surfaces extérieures un gradient de variation des propriétés physico-chimiques selon la direction axiale.

5. Ensembles montés jumelés (12, 13) selon l'une des revendications précédentes, **caractérisés en ce que** dans tout plan circonférentiel des bandes de roulement de chacun des pneumatiques (121, 122, 131, 132) des ensembles montés jumelés, les propriétés physico-chimiques sont identiques selon les directions longitudinale et radiale.

6. Ensembles montés jumelés (22, 23) selon l'une des revendications 1 à 4, **caractérisés en ce que** dans tout plan circonférentiel des bandes de roulement de chacun des pneumatiques (221, 222, 231, 232) des ensembles montés jumelés, les propriétés physico-chimiques sont identiques selon la direction longitudinale et présentent au moins une variation selon la direction radiale.

7. Utilisation d'ensembles montés jumelés selon l'une des revendications précédentes, sur au moins un train d'un véhicule, tel qu'un véhicule de transport ou un engin de « Génie Civil », comprenant au moins deux paires d'ensembles montés jumelés deux à deux.

## Claims

1. Twin-mounted sets (12, 13) for a vehicle, such as a public transport vehicle or a "civil engineering plant" vehicle, constituting a pair of mounted sets, each mounted set comprising a tyre (121, 122, 131, 132) mounted on a wheel, each tyre comprising a tread having an exterior surface **characterized in that** each of the treads of the tyres (121, 122, 131, 132) of the twin-mounted sets comprises at least on its exterior surface at least two circumferential parts made of polymer blends (A, B) that have different physico-chemical properties, and **in that** the axial distributions of the said polymer blends in the treads of each of the tyres are symmetric with respect to a longitudinal plane passing through a point mid-way between the twin-mounted sets.

2. Twin-mounted sets (12, 13) according to Claim 1, **characterized in that** the axially outboard circumferential parts (A) of the treads of the tyres (121, 122, 131, 132) of the twin-mounted sets made of polymer blends have rigidity properties superior to the rest (B) of the tread surface.

3. Twin-mounted sets (12, 13) according to Claim 1, **characterized in that** the axially outboard circumferential parts (A) of the treads of the tyres (121, 122, 131, 132) of the twin-mounted sets made of polymer blends have rigidity properties inferior to the rest (B) of the tread surface.

4. Twin-mounted sets (12, 13) according to one of the preceding claims, **characterized in that** the treads of each of the tyres (121, 122, 131, 132) of the twin-mounted sets have, at least on their exterior surfaces, a gradient of variation of the physico-chemical properties in the axial direction.

5. Twin-mounted sets (12, 13) according to one of the preceding claims, **characterized in that**, in a n y circumferential plane of the treads of each of the tyres (121, 122, 131, 132) of the twin-mounted sets, the physico-chemical properties are identical in the longitudinal and radial directions.

6. Twin-mounted sets (22, 23) according to one of Claims 1 to 4, **characterized in that**, in a n y circumferential plane of the treads of each of the tyres (221, 222, 231, 232) of the two twin-mounted sets, the physico-chemical properties are identical in the longitudinal direction, and exhibit at least one variation in the radial direction.

7. Use of twin-mounted sets according to one of the preceding claims on at least one axle set of a vehicle, such as a public transport vehicle or a "civil engineering plant" vehicle, comprising at least two pairs of twin-mounted sets mounted in pairs.

## Patentansprüche

1. Zwillingsmontierte Einheiten (12, 13) für ein Fahrzeug, wie ein Transportfahrzeug oder eine Baumaschine, die ein Paar von montierten Einheiten bilden, wobei jede montierte Einheit einen auf ein Rad montierten Luftreifen (121, 122, 131, 132) enthält, wobei jeder Luftreifen einen Laufstreifen enthält, der eine Außenfläche hat, **dadurch gekennzeichnet, dass** jeder der Laufstreifen der Luftreifen (121, 122, 131, 132) der zwillingsmontierten Einheiten mindestens auf seiner Außenfläche mindestens zwei Umfangsbereiche aufweist, die aus Polymermischungen (A, B) mit unterschiedlichen physikalisch-chemischen Eigenschaften bestehen, und dass die axialen Verteilungen der Polymermischungen in den Laufstreifen jedes der Luftreifen bezüglich einer Längsebene symmetrisch sind, die durch einen Punkt auf halber Strecke zwischen den zwillingsmontierten Einheiten verläuft.

2. Zwillingsmontierte Einheiten (12, 13) nach Anspruch 1, **dadurch gekennzeichnet, dass** die aus Polymermischungen bestehenden axial äußeren Umfangsbereiche (A) der Laufstreifen der Luftreifen (121, 122, 131, 132) der zwillingsmontierten Einheiten Steifigkeitseigenschaften aufweisen, die höher als im Rest (B) der Lauffläche sind.

3. Zwillingsmontierte Einheiten (12, 13) nach Anspruch 1, **dadurch gekennzeichnet, dass** die aus Polymermischungen bestehenden axial äußeren Umfangsbereiche (A) der Laufstreifen der Luftreifen (121, 122, 131, 132) der zwillingsmontierten Einheiten Steifigkeitseigenschaften aufweisen, die niedriger als im Rest (B) der Lauffläche sind.

4. Zwillingsmontierte Einheiten (12, 13) nach einem der vorhergehenden Ansprüche, **dadurch gekennzeichnet, dass** die Laufstreifen jedes der Luftreifen (121, 122, 131, 132) der zwillingsmontierten Einheiten mindestens auf ihren Außenflächen einen Variationsgradienten der physikalisch-chemischen Eigenschaften in axialer Richtung aufweisen.

5. Zwillingsmontierte Einheiten (12, 13) nach einem der vorhergehenden Ansprüche, **dadurch gekennzeichnet, dass** in jeder Umfangsebene der Laufstreifen jedes der Luftreifen (121, 122, 131, 132) der zwillingsmontierten Einheiten die physikalisch-chemischen Eigenschaften in der Längsrichtung und der radialen Richtung gleich sind.

6. Zwillingsmontierte Einheiten (22, 23) nach einem der Ansprüche 1 bis 4, **dadurch gekennzeichnet, dass** in jeder Umfangsebene der Laufstreifen jedes der Luftreifen (221, 222, 231, 232) der zwillingsmontierten Einheiten die physikalisch-chemischen Eigenschaften in der Längsrichtung gleich sind und mindestens eine Variation in der radialen Richtung aufweisen.

7. Verwerdung zwillingsmontierter Einheiten nach einem der vorhergehenden Ansprüche auf mindestens einer Achse eines Fahrzeugs, wie eines Transportfahrzeugs oder einer Baumaschine, die mindestens zwei Paare Von paarweise zwillingsmontierten Einheiten enthält.
